# FASCICULE DE BREVET EUROPEEN

(11) **EP 3 933 626 B1**
(45) Date de publication et mention de la délivrance du brevet: **30.08.2023**
(21) Numéro de dépôt: 21305915.7
(22) Date de dépôt: 01.07.2021
(51) Int. Cl.: G06F 21/32, H04L 9/40, G06V 40/10

(54) **EVALUATION DU BIAIS D'UNE FONCTION D'IDENTIFICATION BIOMÉTRIQUE**
BEWERTUNG DER VERZERRUNG EINER BIOMETRISCHEN IDENTIFIKATIONSFUNKTION
ASSESSMENT OF THE BIAS OF A BIOMETRIC IDENTIFICATION FUNCTION

(30) Priorité: 01.07.2020 FR 2006953
(43) Date de publication de la demande: 05.01.2022
(73) Titulaire: Idemia Identity & Security France, 92400 Courbevoie (FR)
(72) Inventeur: KAZDAGHLI, Laurent, 92400 Courbevoie (FR)
(74) Mandataire: Idemia

(56) Documents cités:
- POH NORMAN ET AL: "A Biometric Menagerie Index for Characterising Template/Model-Specific Variation", 2 juin 2009 (2009-06-02), BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, XP047468486, ISBN: 978-3-642-17318-9 * abrégé * * page 1 - page 5 *
- CABANA ANTOINE ET AL: "Mono and multi-modal biometric systems assessment by a common black box testing framework", FUTURE GENERATION COMPUTER SYSTEMS, ELSEVIER SCIENCE PUBLISHERS. AMSTERDAM, NL, vol. 101, 13 juin 2019 (2019-06-13), pages 293-303, XP085914775, ISSN: 0167-739X, DOI: 10.1016/J.FUTURE.2019.04.053 [extrait le 2019-06-13]
- DROZDOWSKI PAWEL ET AL: "Demographic Bias in Biometrics: A Survey on an Emerging Challenge", IEEE TRANSACTIONS ON TECHNOLOGY AND SOCIETY, IEEE, vol. 1, no. 2, 5 mai 2020 (2020-05-05), pages 89-103, XP011791675, DOI: 10.1109/TTS.2020.2992344

## Description

### DOMAINE DE L'INVENTION

La présente invention s'inscrit dans le domaine de l'identification biométrique. L'invention trouve notamment une application avantageuse pour l'amélioration d'algorithmes d'identification biométrique permettant de faire correspondre une donnée biométrique candidate acquise à des données biométriques « latentes » non identifiées, par exemple des données latentes issues d'une base UL de police.

### ETAT DE LA TECHNIQUE

La biométrie est largement utilisée pour la détermination ou le contrôle d'identité. Les techniques d'identification biométrique utilisent par exemples des images ou sons acquis sur un individu, tels que des images d'empreintes digitales, des images de visage ou des extraits de voix, à partir desquels sont extraites des caractéristiques normalisées.

Dans le cas de la reconnaissance d'empreintes digitales, de nombreuses techniques sont connues pour extraire des points particuliers d'empreintes, appelés « minuties », à partir d'images d'extrémité de doigt. Les minuties repèrent par exemple les bifurcations dans les lignes de l'empreinte, ou les extrémités de crêtes dans une carte de crêtes de l'empreinte. Un ensemble de minuties est considéré comme caractéristique des empreintes digitales d'un individu donné.

Une fonction d'identification biométrique peut par exemple évaluer une correspondance entre d'une part les minuties d'une empreinte candidate acquise, et d'autre part les minuties de chaque empreinte parmi un ensemble d'empreintes enregistrées dans une base de données. Il est particulièrement approprié de développer les fonctions d'identification biométrique à partir de réseaux de neurones sélectionnés pour leurs bonnes performances dans l'analyse d'images, par exemple des réseaux de neurones convolutifs (ou « CNN ») entraînés par apprentissage automatique.

L'identification biométrique est utilisée en criminalistique, pour déterminer l'identité d'un suspect ayant par exemple laissé des empreintes digitales sur un objet présent sur une scène de crime. De nombreuses empreintes laissées sur une scène de crime sont des empreintes dites « latentes » qui ne bénéficient pas de conditions optimales pour extraire les minuties, et qui ne sont notamment pas visibles à l'œil nu. Le dessin d'une empreinte latente est par exemple flou et/ou ne se détache pas suffisamment de l'arrière-plan de la surface de l'objet. Les forces de police disposent de techniques de révélation pour mettre en valeur et enregistrer le dessin d'une empreinte latente.

Au fil du temps, les forces de police sont en mesure de constituer des bases de données d'empreintes « latentes » précédemment acquises, par exemple retrouvées sur des scènes de crime, et auxquelles il n'a pas été associé d'identité d'individu. Une telle base de données peut être qualifiée de « base UL » (pour Unidentified Latent, les empreintes rassemblées dans une telle base étant des empreintes latentes non identifiées).

Le principe de l'identification est comme suit : lorsqu'une nouvelle empreinte est acquise, ladite empreinte peut être comparée de manière automatisée à chaque empreinte latente non identifiée présente dans une base UL, à l'aide d'une fonction d'identification biométrique. Si la nouvelle empreinte acquise présente un score de correspondance suffisant avec une ou plusieurs empreintes latentes de la base UL, alors lesdites empreintes latentes sont considérées comme des candidats potentiels.

La nouvelle empreinte candidate peut notamment avoir été acquise de manière contrôlée, par exemple sur un suspect, à l'aide d'un capteur biométrique. En alternative, la nouvelle empreinte candidate est également une empreinte de scène de crime.

Pour achever de déterminer si une ou plusieurs empreintes de la base UL appartiennent au même individu que la nouvelle empreinte acquise, un examinateur humain peut prendre le relais et procéder à un examen poussé, notamment visuel. On comprendra que l'étape préalable de comparaison automatisée par ordinateur vis-à-vis de chaque empreinte latente de la base UL est indispensable, car il n'est pas réalisable pour un examinateur humain de procéder à un examen poussé et minutieux vis-à-vis de chaque empreinte de la base UL - cette dernière pouvant contenir plusieurs millions d'empreintes latentes non identifiées. On souhaite concevoir des fonctions d'identification pour lesquelles le nombre de candidats potentiels remontés à l'examinateur humain demeure modéré.

Un premier problème constaté pour l'identification biométrique vis-à-vis d'une base UL est la performance insuffisante de certaines fonctions d'identification biométrique, du point de vue du nombre de faux rejets (score de correspondance entre deux empreintes inférieur au seuil de validation, alors que les deux empreintes sont issues d'un même individu) ainsi que du point de vue du nombre de fausses acceptations (score de correspondance supérieur ou égal au seuil de validation, alors que les deux empreintes sont issues d'individus différents). Pour pallier ce problème, il est connu de procéder à une optimisation des fonctions d'identification biométrique, notamment lorsqu'il s'agit de réseaux CNN. On peut optimiser individuellement les paramètres d'un CNN pour minimiser les faux rejets et/ou les fausses acceptations obtenus à partir d'une ou plusieurs bases de données d'entraînement. On peut également procéder à des fusions de CNN.

Un deuxième problème constaté pour l'identification biométrique vis-à-vis d'une base UL est la forte propension de certaines fonctions d'identification biométrique à retourner de fausses acceptations qui impliquent la même empreinte, ou qui impliquent plus généralement le même type d'empreintes. Dans ce cas, la même empreinte acquise et/ou la même empreinte latente de la base UL sont fréquemment associées à un résultat de correspondance positif erroné, et sont donc fréquemment remontées à l'examinateur humain pour un examen poussé. La fonction d'identification est donc biaisée.

Cette situation peut notamment se produire en cas de surapprentissage pendant la phase d'entraînement de CNN, et/ou en cas de mauvaise représentation d'un ou plusieurs groupes d'individus dans la ou les bases de données d'entraînement. L'apprentissage de CNN à partir d'empreintes latentes peut être difficile, car des empreintes latentes de la même identité peuvent présenter des rotations ou des occultations les unes par rapport aux autres. De plus, des minuties peuvent être détectées de manière erronée dans l'arrière-plan.

Le biais d'identification mentionné ci-avant, appelé « risque de Doddington », doit impérativement être minimisé car la remontée fréquente de la même empreinte peut provoquer une rapide lassitude. L'examinateur humain risque, en pratique, de procéder à des examens moins minutieux s'agissant de ladite empreinte. Il risque également de considérer comme non fiables les candidats potentiels proposés par l'outil informatique. L'état de la technique dans le domaine de l'identification biométrique ne donne donc pas satisfaction concernant l'évaluation du « risque de Doddington ». Ainsi, des fonctions d'identification biométrique très performantes du point de vue du nombre de faux rejets et de fausses acceptations peuvent s'avérer peu utilisables en pratique, car le biais associé au risque de Doddington n'a pas été dûment pris en compte au cours de leur développement.

Le document Poh Norman et AI.: "A Biométrie Menagerie Index For Characterising Template/ Model-Specific Variation", 2 juin 2009 (2009-06-02), Big Data Aanalytics In The Social And Ubiquitous Context: 5TH International Workshop On Modeling Social Media, MSM 2014, 5TH International Workshop on Mining Ubiquitous And Social Environments, MUSE 2014 And First International Workshop On Machine Learning, ISBN: 978-3-642-17318-9, est aussi un document pertinent.

### DESCRIPTION GENERALE DE L'INVENTION

Un but de l'invention est de développer des fonctions d'identification biométrique améliorées, dont le biais vis-à-vis du « risque de Doddington » est minimisé de façon simple et rapide. L' invention est définie dans les revendications indépendantes 1, 13, 14 et 15.

On recherche notamment un procédé d'évaluation d'un biais de fonction d'identification biométrique, permettant de quantifier à quel point ladite fonction retourne fréquemment des fausses acceptations impliquant une même empreinte candidate ou impliquant une même empreinte de référence.

Une finalité est de développer des algorithmes d'identification biométrique non seulement fiables et performants du point de vue de la minimisation des faux rejets et des fausses acceptations, mais également peu biaisés pour éviter qu'un examinateur humain - appartenant par exemple aux forces de police - ne soit invité à procéder à un trop grand nombre d'examens poussés vis-à-vis d'une même empreinte latente. On souhaite ainsi rendre l'identification biométrique plus fiable et plus pratique pour les forces de police.

Pour répondre à ces besoins, il est proposé, selon un premier aspect de l'invention, un procédé d'évaluation d'une fonction d'identification biométrique, le procédé d'évaluation étant mis en oeuvre à partir d'un ensemble de données biométriques candidates et à partir d'un ensemble de données biométriques de référence,
les données biométriques candidates et les données biométriques de référence étant du même type et étant chacune associée à un individu connu,
la fonction d'identification biométrique, appliquée à une donnée biométrique candidate et à une donnée biométrique de référence, retournant un résultat de correspondance desdites deux données, le procédé comprenant des étapes de :
   - obtention de paires de fausses correspondances, chaque paire comprenant une donnée biométrique candidate et une donnée biométrique de référence non associées à un même individu connu, et dont le résultat de correspondance est supérieur ou égal à un seuil prédéterminé,
   - détermination, pour chaque donnée biométrique candidate comprise dans au moins une paire de fausses correspondances, d'un premier nombre associé à ladite donnée biométrique candidate et égal au nombre de paires de fausses correspondances obtenues comprenant ladite donnée biométrique candidate,
      et/ou détermination, pour chaque donnée biométrique de référence comprise dans au moins une paire de fausses correspondances, d'un deuxième nombre associé à ladite donnée biométrique de référence et égal au nombre de paires de fausses correspondances obtenues comprenant ladite donnée biométrique de référence,
   - calcul d'un score de biais associé à la fonction d'identification biométrique, le score de biais étant calculé en fonction d'un maximum des premiers nombres déterminés à partir des paires de fausses correspondances et/ou en fonction d'un maximum des deuxièmes nombres déterminés à partir des paires de fausses correspondances.

Le procédé d'évaluation défini ci-avant peut présenter en outre les caractéristiques optionnelles et non limitatives suivantes, prises seules ou en l'une quelconque des combinaisons techniquement possibles :
- le score de biais est égal à l'un parmi :
   le maximum des premiers nombres associés à une donnée biométrique candidate ;
   ou le maximum des deuxièmes nombres associés à une donnée biométrique de référence ;
   ou une somme du maximum des premiers nombres associés à une donnée biométrique candidate affecté d'un premier coefficient et du maximum des deuxièmes nombres associés à une donnée biométrique de référence affecté d'un deuxième coefficient.
- l'ensemble de données biométriques de référence est issu d'une base de données d'empreintes latentes d'entraînement.
- l'ensemble de données biométriques candidates comprend une pluralité de données biométriques candidates associées chacune à un individu connu présent dans la base de données d'empreintes latentes d'entraînement, et comprend en outre une pluralité de données biométriques candidates associées chacune à un individu connu absent de la base de données d'empreintes latentes d'entraînement.
- les données biométriques candidates et les données biométriques de référence sont issues d'empreintes digitales, ou sont issues d'images d'iris, ou sont issues d'images de visage, ou sont issues d'extraits de voix d'individus.
- en nommant requêtes correspondantes les paires comprenant une donnée biométrique candidate et une donnée biométrique de référence dont le résultat de correspondance retourné par la fonction biométrique est supérieur ou égal au seuil prédéterminé, le seuil prédéterminé pour le résultat de correspondance est choisi pour qu'un rapport entre le nombre total de paires de fausses correspondances et le nombre total de requêtes correspondantes soit égal à un taux de fausses acceptations prédéterminé.
- le taux de fausses acceptations est supérieur à 0,50%, plus préférentiellement supérieur à 1,0% et inférieur à 20%, encore plus préférentiellement égal à 10%.
- le procédé comprend une étape de détermination d'un score de performance associé à la fonction d'identification biométrique.
- le score de performance dépend d'un taux de faux rejets de la fonction d'identification biométrique et du taux de fausses acceptations.
- le procédé comprend une étape d'évaluation du score de biais par rapport à un seuil de biais, la fonction d'identification biométrique étant évaluée comme suffisamment peu biaisée si le score de biais est inférieur ou égal au seuil de biais.
- le procédé comprend une étape supplémentaire de comparaison entre le score de biais obtenu pour la fonction d'identification biométrique et un score supplémentaire de biais obtenu pour une fonction supplémentaire d'identification biométrique.
- le procédé comprend une étape supplémentaire d'obtention d'une fonction améliorée d'identification biométrique, à partir de la fonction d'identification biométrique,
de sorte qu'un score amélioré de biais obtenu pour la fonction améliorée d'identification biométrique soit strictement inférieur au score de biais obtenu pour la fonction d'identification biométrique.

L'invention vise en outre un procédé de traitement de données comprenant un procédé d'évaluation tel que défini ci-avant, une fonction améliorée d'identification biométrique étant obtenue à l'issue dudit procédé d'évaluation, le procédé de traitement de données comprenant en outre une identification d'au moins une donnée biométrique non identifiée à partir de la fonction améliorée d'identification biométrique et à partir de la donnée biométrique non identifiée, le procédé de traitement comprenant des étapes de :
- obtention d'une donnée biométrique candidate, la donnée biométrique candidate étant du même type que la donnée biométrique non identifiée,
- calcul d'au moins un résultat de correspondance entre la donnée biométrique candidate obtenue et la donnée biométrique non identifiée,
- si le résultat de correspondance est supérieur ou égal à un seuil, association entre la donnée biométrique non identifiée et une identité correspondant à la donnée biométrique candidate.

Selon un deuxième aspect, l'invention concerne un système d'identification biométrique d'un individu, comprenant une unité de traitement configurée pour mettre en oeuvre un procédé de traitement tel que défini ci-avant, à partir de la donnée biométrique candidate acquise et à partir d'un ensemble de données biométriques non identifiées, et un capteur biométrique configuré pour acquérir une donnée biométrique candidate.

Selon un troisième aspect, l'invention se rapporte à un produit programme d'ordinateur sur lequel sont enregistrées des instructions de code qui, lorsque lesdites instructions sont exécutées par un ordinateur, conduisent l'ordinateur à exécuter un procédé d'évaluation tel que défini ci-avant, ou à exécuter un procédé de traitement tel que défini ci-avant.

Selon un quatrième aspect, l'invention se rapporte à des moyens de stockage lisibles par ordinateur, sur lesquels sont enregistrées des instructions de code pour la mise en oeuvre d'un procédé d'évaluation tel que défini ci-avant, ou pour la mise en oeuvre d'un procédé de traitement tel que défini ci-avant.

### DESCRIPTION GENERALE DES FIGURES

D'autres caractéristiques, buts et avantages de l'invention ressortiront de la description qui suit, qui est purement illustrative et non limitative, et qui doit être lue en regard des dessins annexés parmi lesquels :

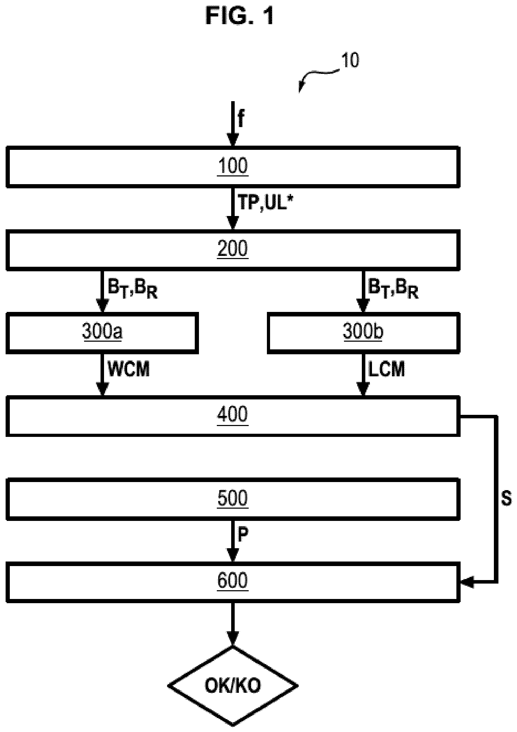

[Fig. 1] La **Figure 1** illustre des étapes d'un procédé d'évaluation du biais d'une fonction d'identification biométrique, selon un exemple de réalisation.

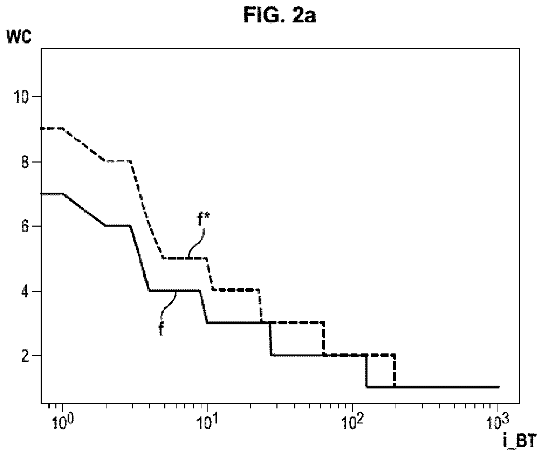

[Fig. 2a] La **Figure 2a** représente graphiquement un nombre de paires de fausses correspondances (en ordonnée) obtenu avec deux fonctions d'identification, pour des empreintes candidates d'une base d'empreintes candidates rangées (en abscisse, en échelle logarithmique) par ordre décroissant de nombre de paires de fausses correspondances associées. Le taux de fausses acceptations est ici de 10%.

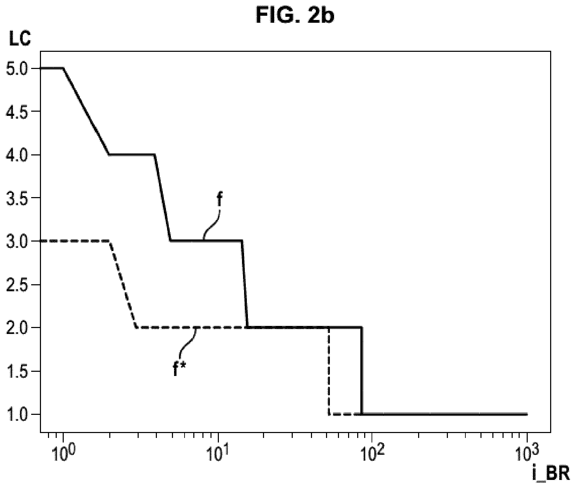

[Fig. 2b] La **Figure 2b** représente graphiquement un nombre de paires de fausses correspondances (en ordonnée) obtenu avec deux fonctions d'identification, pour des empreintes de référence d'une base d'empreintes de référence rangées (en abscisse, en échelle logarithmique) par ordre décroissant de nombre de paires de fausses correspondances associées. Le taux de fausses acceptations est ici de 10%.

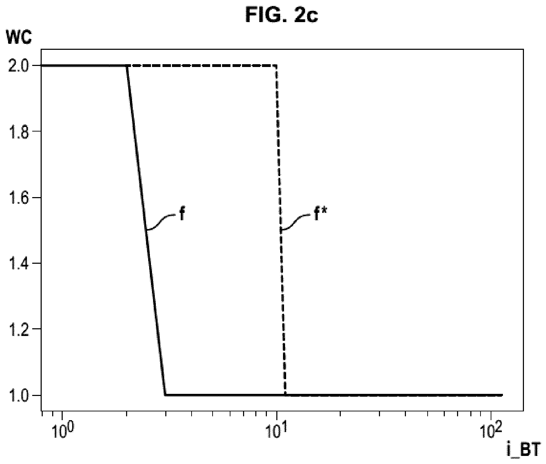

[Fig. 2c] La **Figure 2c** représente graphiquement un nombre de paires de fausses correspondances (en ordonnée) obtenu avec deux fonctions d'identification, pour des empreintes candidates d'une base d'empreintes candidates rangées (en abscisse, en échelle logarithmique) par ordre décroissant de nombre de paires de fausses correspondances associées. Le taux de fausses acceptations est ici de 1%.

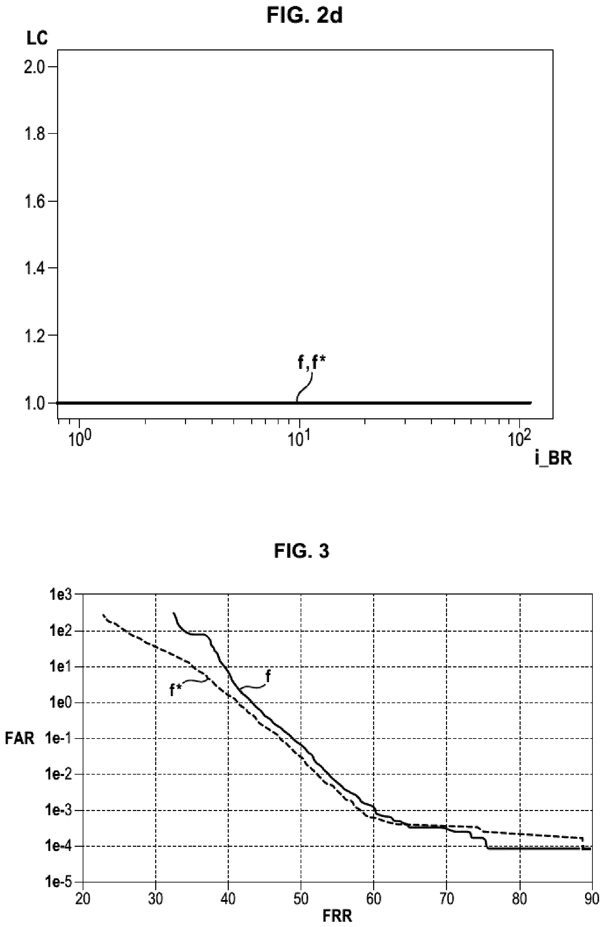

[Fig. 2d] La **Figure 2d** représente graphiquement un nombre de paires de fausses correspondances (en ordonnée) obtenu avec deux fonctions d'identification, pour des empreintes de référence d'une base d'empreintes de référence rangées (en abscisse, en échelle logarithmique) par ordre décroissant de nombre de paires de fausses correspondances associées. Le taux de fausses acceptations est ici de 1%.
[Fig. 3] La **Figure 3** est un graphique comparatif de la performance de deux fonctions d'identification, illustrant les taux de faux rejets (en ordonnée) obtenus selon les deux fonctions d'identification, en fonction des taux de fausses acceptations (en abscisse) rangés par ordre croissant.

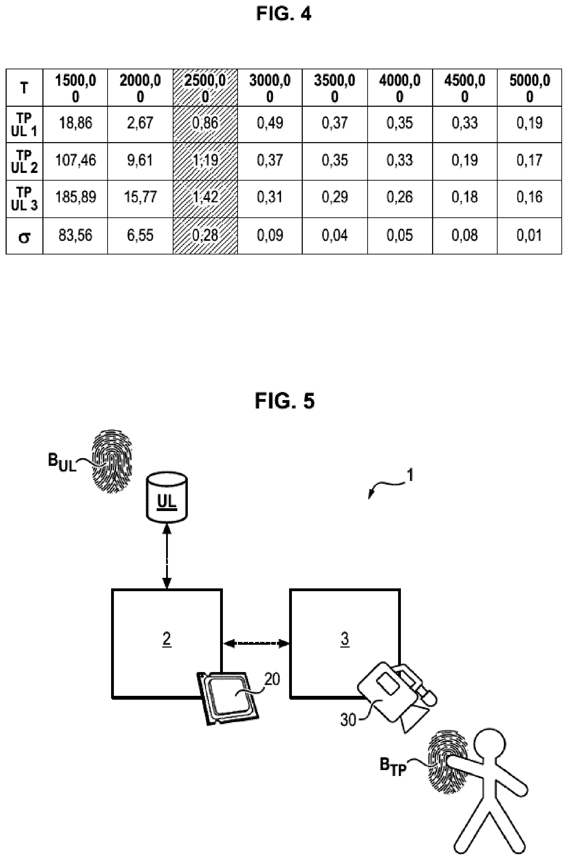

[Fig. 4] La **Figure 4** est un tableau relatif à la stabilité d'une série de fonctions d'identification vis-à-vis du taux de fausses acceptations. Le tableau compare les taux de fausses acceptations obtenus pour trois bases de données d'empreintes candidates et de référence, pour une pluralité de seuils de validation.
[Fig. 5] La **Figure 5** représente schématiquement un système d'identification biométrique selon un exemple de réalisation.

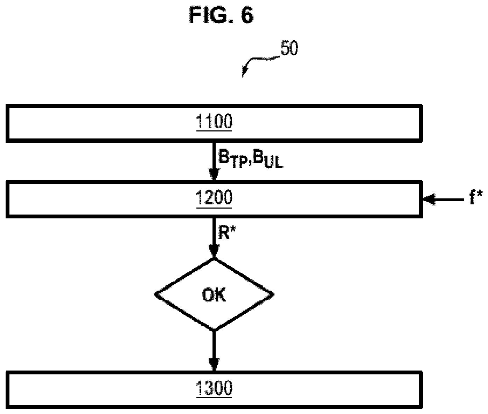

[Fig. 6] La **Figure 6** illustre des étapes d'un procédé d'identification biométrique selon un exemple, ledit procédé pouvant être mis en oeuvre par le système de la Figure 5.

### DESCRIPTION DETAILLEE DE MODES DE REALISATION DE L'INVENTION

Dans la description détaillée ci-après et sur les figures annexées, on décrit l'exemple d'une évaluation du biais associé au « risque de Doddington » pour une fonction f d'identification biométrique prenant en entrée une empreinte candidate de type TP et une empreinte latente issue d'une base UL. La fonction f retourne en sortie un résultat R de correspondance entre lesdites deux empreintes, ce résultat R pouvant être comparé à un seuil T de validation associé à la fonction f afin de déterminer si lesdites deux empreintes appartiennent à un même individu.

On parlera, dans toute la suite, de résultat « positif » si les deux empreintes sont considérées comme appartenant au même individu (résultat R supérieur ou égal au seuil T).

On parlera de résultat « négatif » si les deux empreintes sont considérées comme n'appartenant pas au même individu (résultat R inférieur au seuil T).

Toutefois, on comprendra que l'invention s'applique avec les mêmes avantages pour des fonctions d'identification biométrique qui exploiteraient d'autres types de trait biométrique. Les étapes décrites ci-après pour l'évaluation de biais - et, le cas échéant, pour l'évaluation de performance et pour l'identification biométrique - s'appliquent avantageusement à tout type de trait biométrique et notamment à des images d'iris, des images de visage, ou des extraits de voix d'individus.

Le biais associé au « risque de Doddington » quantifie une propension de la fonction f d'identification biométrique à retourner de fausses acceptations qui impliquent une même donnée biométrique, ici une même empreinte. A titre illustratif, on distingue deux cas :
- Une fonction biaisée retourne fréquemment un résultat positif entre d'une part une même empreinte candidate, et d'autre part une pluralité d'empreintes de référence différentes. Dans la classification de Doddington, ladite empreinte candidate peut être qualifiée de « wolf ». Il s'agit d'une empreinte qui peut réaliser des identifications réussies vis-à-vis de plusieurs individus différents enregistrés en base de données ;
- Une fonction biaisée retourne fréquemment un résultat positif entre d'une part une pluralité d'empreintes candidates différentes, et d'autre part une même empreinte de référence.

Dans la classification de Doddington, ladite empreinte de référence peut être qualifiée de « lamb ». Il s'agit d'une empreinte vis-à-vis de laquelle plusieurs individus différents peuvent réaliser une identification réussie.
- Une définition générale des risques de Doddington, et une description des catégories « wolf » et « lamb » ainsi que d'autres catégories de la classification de Doddington, figurent dans la publication suivante : Analysis of Doddington Zoo Classification for User Dépendent Template Update: Application to Keystroke Dynamics Recognition, Abir Mhenni, Estelle Cherrier, Christophe Rosenberger, Najoua Essoukri Ben Amara, Future Génération Computer Systems, Elsevier, 2019.

Sur l'ensemble des figures annexées et tout au long de la description ci-après, les éléments similaires portent des références alphanumériques identiques.

### Empreintes candidates et empreintes de référence

Dans toute la suite, l'évaluation du biais de la fonction f est réalisée à partir d'une base TP de données biométriques candidates, et à partir d'une base UL* de données biométriques de référence. Les données candidates et les données de référence sont ici des empreintes.

Par « empreinte » on entend une trace, et de façon générale tout contenu structuré constitué de crêtes et de vallées (généralement binaire, i.e. en noir en blanc) pouvant se surimprimer à l'arrière-plan, et en particulier une empreinte biométrique associée de manière unique à un individu. L'empreinte est avantageusement choisie parmi une empreinte digitale, une empreinte palmaire, une empreinte rétinienne, etc.

Dans toute la suite, on considère des empreintes digitales.

Par « donnée candidate » on entend ici une donnée destinée à être acquise de manière contrôlée et volontaire, par exemple à l'aide d'un capteur biométrique. La donnée candidate peut ainsi servir de base pour une identification biométrique.

De manière avantageuse, les empreintes candidates B_{T} de la base TP sont des empreintes « directes » bénéficiant d'un haut niveau de visibilité, par exemple des images « Ten Print » issues d'un scanner biométrique à dix doigts. Les empreintes candidates B_{T} sont typiquement de bonne qualité, et bien isolées. Les empreintes candidates B_{T} sont par exemple sur fond blanc.

Par « donnée de référence » on entend ici une donnée destinée à être enregistrée dans une base de données avant une identification biométrique, pour comparaison ultérieure avec une donnée candidate acquise.

De manière avantageuse, au cours de l'évaluation du biais de la fonction f, les empreintes de référence B_{R} de la base UL* sont des empreintes de type « latentes », c'est-à-dire des images représentatives d'une empreinte par-dessus un arrière-plan dont la visibilité est faible, par opposition aux images Ten Print qui sont des empreintes « directes ».

Par « arrière-plan », on entend un fond texturé sur lequel peut se surimprimer une empreinte, par exemple un meuble, un billet, une arme, un papier, de la vaisselle, etc. Il peut y avoir une confusion entre des motifs de l'empreinte et des motifs de l'arrière-plan, ce qui explique pourquoi la visibilité de l'empreinte latente est faible.

La notion d'arrière-plan est opposée à la notion de fond uni. Bien qu'on puisse considérer qu'une empreinte directe est surimprimée à un fond blanc, on comprendra que l'empreinte directe se détache sans difficulté de ce fond et peut être isolée par segmentation, ce qui est très difficile ou impossible pour une empreinte latente.

Les empreintes de référence B_{R} de la base UL* utilisée pour l'évaluation de biais, ainsi que les empreintes candidates B_{T} de la base TP utilisée pour l'évaluation de biais, ont la particularité d'être associées chacune à une identité d'individu. On peut respectivement qualifier les empreintes de référence B_{R} et les empreintes candidates B_{T} d'empreintes de référence d'entraînement, et d'empreintes candidates d'entraînement. Ces empreintes reproduisent de préférence les mêmes propriétés que les empreintes en utilisation réelle : basse visibilité pour les empreintes de référence B_{R} et haute visibilité pour les empreintes candidates B_{T}.

De manière très avantageuse, la base TP d'empreintes candidates comprend une pluralité d'empreintes candidates associées chacune à un individu connu présent dans la base UL* (par individu présent dans la base, on entend qu'une empreinte de référence de la base UL* est extraite dudit individu), et comprend en outre une pluralité d'empreintes candidates associées chacune à un individu connu absent de la base UL* (i.e. aucune empreinte de référence de la base UL* n'est extraite de ce dernier individu).

A l'inverse, dans un cas réel d'utilisation de la fonction f, les empreintes de référence sont de préférence des empreintes (ci-après notées B_{UL}) non associées à une identité d'individu, c'est-à-dire non labellisées. Il s'agit typiquement d'empreintes latentes.

Comme il sera vu ci-après, en pratique, il s'agit souvent d'empreintes issues d'une base UL constituée par exemple par les forces de police.

On notera qu'il n'est pas nécessaire que la base de données biométriques de référence, utilisée pour l'évaluation de biais, comprenne uniquement des données biométriques « latentes ». Pour réaliser l'évaluation du biais de la fonction f, il suffit de disposer de paires de fausses correspondances obtenues à l'aide de la fonction f entre une donnée biométrique candidate et une donnée biométrique de référence.

### Procédé d'évaluation d'une fonction d'identification biométrique

La Figure 1 illustre des étapes d'un procédé 10 d'évaluation du biais d'une fonction f d'identification biométrique, selon un exemple. Le procédé 10 est mis en oeuvre à partir d'une fonction f d'identification biométrique.

La fonction f permet de comparer une empreinte candidate acquise à chaque empreinte latente parmi une pluralité d'empreintes latentes de référence présentes dans une base de données, typiquement une base UL. Un résultat de la fonction f appliquée à deux images d'empreintes est, par exemple, un résultat R de correspondance entre des données extraites des deux images d'empreintes. Les données extraites comparées sont typiquement des images binarisées de « cartes de crêtes » des deux empreintes.

Dans la suite, la fonction f est associée à un seuil T de validation.

On cherche à évaluer la propension de la fonction f à obtenir des identifications biométriques réussies erronées (c'est-à-dire de fausses acceptations) pour une même empreinte candidate (« wolf » dans la classification de Doddington), ou pour une même empreinte de référence (« lamb » dans la classification de Doddington).

Un objectif est de développer des fonctions d'identification biométrique présentant non seulement un taux de fausses acceptations limité, mais pour lesquelles les fausses acceptations sont statistiquement mieux réparties entre les individus. On cherche à éviter qu'une empreinte particulière ou un type d'empreinte particulier fasse souvent l'objet d'identification biométriques réussies erronées. On cherche ainsi à minimiser le temps et le cout opérateur associé à des examens humains poussés, menant à un résultat final négatif pour l'identification.

L'évaluation du biais de la fonction f est ainsi suivie, de manière optionnelle, de la sélection ou de la génération d'une fonction d'identification biométrique présentant un biais moindre vis-à-vis du « risque de Doddington ».

Par exemple, pendant l'évaluation ou à l'issue de l'évaluation, on compare le biais obtenu pour la fonction f à un biais obtenu pour une deuxième fonction f' d'identification biométrique, afin de sélectionner la moins biaisée des deux fonctions, et/ou on valide une fonction améliorée f* d'identification biométrique, comme il sera vu ci-après.

Le procédé 10 d'évaluation est mis en oeuvre par une unité de traitement, typiquement un processeur dans lequel un code associé à la fonction f est enregistré en mémoire.

Le score de biais associé à la fonction f est déterminé à partir d'un ensemble de paires de fausses correspondances, où chaque paire comprend une empreinte candidate B_{T} et une empreinte de référence B_{R} qui ne sont pas associées à un même individu connu, et dont le résultat R de correspondance est positif.

De façon optionnelle, à une étape 100, on obtient un ensemble d'empreintes candidates B_{T} et un ensemble d'empreintes de référence B_{R}, par exemple auprès de bases de données distantes. Les empreintes candidates B_{T} et les empreintes de référence B_{R} sont par exemple issues de bases de données d'apprentissage.

De préférence, le nombre d'empreintes de référence B_{R} utilisées pour l'évaluation de biais est supérieur à 10 000, plus préférentiellement supérieur à 10 000, et est typiquement compris entre 100 000 et 1 000 000.

De préférence, le nombre d'empreintes candidates B_{T} utilisées pour l'évaluation de biais est supérieur à 10 000, plus préférentiellement supérieur à 50 000, et est typiquement compris entre 50 000 et 1 000 000.

On rappelle que, de préférence, les empreintes candidates B_{T} utilisées pour l'évaluation de biais sont des empreintes bénéficiant d'une bonne visibilité (de préférence des empreintes TP) associées à un individu identifié, et que de préférence, les empreintes de référence B_{R} utilisées pour l'évaluation de biais sont des empreintes latentes issues d'une base UL* associées à un individu identifié.

A une étape 200, on obtient un ensemble de paires de fausses correspondances (B_{T}, B_{R}) entre des empreintes candidates et des empreintes de référence.

Pour ce faire, la fonction f peut être appliquée à un grand nombre de paires empreinte candidate/empreinte de référence, parmi les empreintes obtenues à l'étape 100.

Parmi les paires restituant un résultat R de correspondance positif (que l'on désignera ci-après « requêtes correspondantes »), c'est-à-dire restituant un résultat R supérieur ou égal au seuil T, certaines paires rassemblent une empreinte candidate et une empreinte de référence qui appartiennent réellement au même individu.

D'autres requêtes correspondent à des « paires de fausses correspondances » (B_{T}, B_{R}) rassemblant une empreinte candidate B_{T} et une empreinte de référence B_{R} qui ne sont pas associées au même individu. Ce sont ces paires de fausses correspondances qui sont utilisées pour évaluer le biais lié au « risque de Doddington ».

En alternative, un ensemble de requêtes correspondantes pré-constitué et/ou un ensemble de paires de fausses correspondances pré-constitué peuvent être préalablement enregistrés en mémoire, ou obtenus à l'étape 200 auprès d'une base de données distante, par exemple par l'intermédiaire d'un réseau de communications Wi-Fi, 4G, 5G, etc.

De manière très avantageuse, un rapport entre le nombre total de paires de fausses correspondances (B_{T}, B_{R}) et le nombre total de requêtes correspondantes est choisi égal à un taux FAR de fausses acceptations prédéterminé. Le taux FAR de fausses acceptations peut être ajusté en modifiant les paramètres de la fonction f d'identification (notamment son seuil de validation T) avant de réaliser l'évaluation de biais.

En sélectionnant le même taux FAR de fausses acceptations pour plusieurs fonctions d'identification à comparer, on s'assure que la comparaison est pertinente.

Dans ce cas, le taux FAR de fausses acceptations sélectionné est avantageusement supérieur à 0,50%, plus préférentiellement supérieur à 1,0% et inférieur à 20%. Le taux FAR est avantageusement pris égal à 10%, ou pris égal à 1,0%.

On comprendra que l'évaluation du biais associé au risque de Doddington peut être réalisée pour une même fonction f d'identification, selon plusieurs taux FAR différents.

A partir des paires de fausses correspondances (B_{T}, B_{R}) obtenues, on détermine ensuite à une étape 300 des « Wolf Counts » et/ou des « Lamb Counts » associés aux empreintes apparaissant au moins une fois parmi les paires de fausses correspondances.

Le Wolf Count (« compteur loup ») WC(B_{T}) d'une empreinte candidate B_{T} représente le nombre d'occurrences de ladite empreinte candidate B_{T} parmi les paires de fausses correspondances, c'est-à-dire le nombre de fois que ladite empreinte candidate B_{T} est considérée de manière erronée comme correspondant à un même individu qu'une empreinte de référence B_{R} par application de la fonction f d'identification.

Le Lamb Count (« compteur agneau ») LC(B_{R}) d'une empreinte de référence B_{R} représente le nombre d'occurrences de ladite empreinte de référence B_{R} parmi les paires de fausses correspondances, c'est-à-dire le nombre de fois que ladite empreinte de référence B_{R} est considérée de manière erronée comme correspondant à un même individu qu'une empreinte candidate B_{T} par application de la fonction f d'identification.

On peut déterminer le biais associé à la fonction f d'identification soit du point de vue des Wolf Counts, soit du point de vue des Lamb Counts, soit de préférence selon les deux points de vue. Dans l'exemple décrit ci-après, on considère les Wolf Counts ainsi que les Lamb Counts.

Plus précisément, à l'étape 300, on compte le nombre WC(B_{T}) pour chaque empreinte candidate B_{T} comprise dans au moins l'une des paires de fausses correspondances (B_{T}, B_{R}), et/ou on compte le nombre LC(B_{R}) pour chaque empreinte de référence B_{R} comprise dans au moins l'une des paires de fausses correspondances (B_{T}, B_{R}).

Les Figures 2a à 2d représentent graphiquement des résultats de comptage obtenus à l'issue de l'étape 300, pour une fonction f d'identification biométrique initiale et pour une fonction améliorée f* d'identification biométrique.

Sur les Figures 2a à 2d, on a indexé en abscisse les empreintes candidates et de référence (index i_BT pour les empreintes candidates B_{T}, et index i_BR pour les empreintes de référence B_{R}) par ordre décroissant de Lamb Count ou de Wolf Count. Autrement dit, les empreintes candidates ou de référence associées à un nombre maximal de paires de fausses correspondances apparaissent à gauche.

La Figure 2a illustre les Wolf Counts WC(B_{T}) par ordre décroissant pour les empreintes candidates B_{T}, avec un taux FAR de fausses acceptations égal à 10%.

La Figure 2b illustre les Lamb Counts LC(B_{R}) par ordre décroissant pour les empreintes de référence B_{R}, avec un taux FAR de fausses acceptations égal à 10%.

La Figure 2c illustre les Wolf Counts WC(B_{T}) par ordre décroissant pour les empreintes candidates B_{T}, avec un taux FAR de fausses acceptations égal à 1,0%.

La Figure 2d illustre les Lamb Counts LC(B_{R}) par ordre décroissant pour les empreintes de référence B_{R}, avec un taux FAR de fausses acceptations égal à 1,0% - s'agissant de cette

Figure 2d, on note que toutes les empreintes de référence B_{R} considérées sont associées à une unique paire de fausses correspondances pour les deux fonctions f et f*.

A partir des résultats de comptage obtenus à l'étape 300, on calcule ensuite à une étape 400 le score de biais S associé à la fonction f d'identification biométrique. Le score de biais S dépend des Wolf Counts et/ou des Lamb Counts.

Plus précisément, le score de biais S est calculé soit en fonction d'un maximum WCM des Wolf Counts, soit en fonction d'un maximum LCM des Lamb Counts, soit (comme dans le présent exemple) en fonction de ces deux maxima WCM et LCM.

Comme indiqué ci-avant, un score de biais S élevé correspond à une fonction f d'identification considérée comme fortement biaisée du point de vue des risques de Doddington, car elle fait souvent apparaître la même empreinte candidate ou la même empreinte de référence dans les fausses acceptations. A l'inverse, plus le score de biais S est faible, plus la fonction f d'identification est considérée comme satisfaisante du point de vue des risques de Doddington.

Une fonction d'identification considérée comme optimale et non biaisée, pour un taux FAR donné, serait donc une fonction pour laquelle tous les Lamb Counts et tous les Wolf Counts sont égaux à 1. En d'autres termes, aucune empreinte candidate ou de référence n'apparaît plus d'une fois dans les paires de fausses correspondances (B_{T}, B_{R}).

Dans le présent exemple, on calcule le score de biais S en fonction du maximum Wolf Count WC(B_{T}) à 10% de FAR et du maximum Lamb Count LC(B_{R}) à 10% de FAR.

En relation à la Figure 2a, le maximum WCM = WC(B_{T})ₘₐₓ pour la fonction f* est égal à 8 et le maximum WCM pour la fonction f est égal à 7. En outre, en relation à la Figure 2b, le maximum LCM = LC(B_{R})ₘₐₓ pour la fonction f* est égal à 3 et le maximum LCM pour la fonction f est égal à 5.

En considérant pour chacune des fonctions d'identification un score de biais S, avec S = WCM + LCM, un score de biais égal à 11 est obtenu pour la fonction f*, et un score de biais égal à 12 pour la fonction f.

De plus, les fonctions f et f* présentent les mêmes Wolf Counts maximaux égaux à 2 (ordonnées à l'origine sur la Figure 2c) et présentent en outre les mêmes Lamb Counts maximaux égaux à 1 (ordonnées à l'origine sur la Figure 2d). On pourrait tenir compte de ces valeurs dans le score de biais S calculé.

Pour la construction d'un score de biais alternatif associé au risque de Doddington pour les fonctions d'identification, on pourrait affecter de coefficients multiplicateurs distincts le maximum WCM des Wolf Counts d'une part, et le maximum LCM des Lamb Counts d'autre part. On peut par exemple donner un poids plus important aux Lamb Counts, afin de considérer la fonction d'identification comme fortement biaisée si la même empreinte de référence base UL est retournée fréquemment dans les paires de fausses correspondances. On pourrait également en alternative considérer plusieurs maximas consécutifs. Par exemple, ici en relation à la Figure 2b, la somme des trois maximas LC(B_{R}) pour la fonction f est égale à 13, et la somme des trois maximas LC(B_{R}) pour la fonction f* est égale à 8.

On notera également que le score de biais S pourrait dépendre d'autres métriques relatives aux Wolf Counts et/ou aux Lamb Counts que les maximas auxquels on se réfère ci-avant. L'aire entre la courbe des Wolf Counts et/ou des Lamb Counts ordonnés par ordre décroissant et la courbe y = 1 peut aussi être une métrique pertinente.

Ici, à l'issue de l'étape 400, une comparaison est réalisée entre les scores de biais calculées pour les deux fonctions f et f* d'identification biométrique. On comprendra qu'il est également possible de ne réaliser l'évaluation de biais que pour une fonction d'identification donnée, ou bien pour une pluralité de déclinaisons de la même fonction parmi lesquelles on souhaite identifier la fonction la moins biaisée.

Il est ainsi déterminé que la fonction f* est moins biaisée que la fonction f du point de vue des risques de Doddington. La fonction f* est ainsi d'utilisation plus pratique que la fonction f, par exemple pour déterminer si une empreinte candidate acquise est présente dans une base UL d'empreintes latentes de référence, comme il sera vu ci-après.

Le cas échéant, la détermination du score de biais (et la comparaison des biais de plusieurs fonctions, le cas échéant) peut être réalisée plusieurs fois, en considérant plusieurs bases de données différentes d'empreintes de référence et/ou d'empreintes candidates. L'évaluation du biais de la fonction f vis-à-vis du risque de Doddington peut s'inscrire dans une évaluation plus générale de la qualité de la fonction f.

De retour au procédé 10 d'évaluation, à une étape 500 optionnelle, un score de performance P associé à la fonction f est déterminé. Ce score de performance P est calculé indépendamment du score de biais S. On comprendra que l'étape 500 peut être mise en oeuvre en parallèle de la détermination du score de biais S, ou en même temps que n'importe laquelle des étapes 100 à 400.

De manière optionnelle et avantageuse, le score de performance P de la fonction f est calculé en fonction des taux FRR de faux rejets et/ou taux FAR de fausses acceptations de la fonction f, et/ou dépend de la stabilité du taux de fausses acceptations (et/ou de faux rejets) vis-à-vis de plusieurs bases de données d'apprentissage distinctes.

La Figure 3 représente des taux de faux rejets (en ordonnée) obtenus avec la fonction améliorée f* et la fonction f, en fonction du taux de fausses acceptations. Les taux FAR de fausses acceptations sont rangés (en abscisse) par ordre croissant. Les différents taux FAR de fausses acceptations sont typiquement associés à différents seuils T de validation pour la fonction améliorée f* et la fonction f.

De manière classique, le taux FRR de « faux rejets » est égal au rapport entre, d'une part, le nombre total de paires empreinte candidate/empreinte de référence donnant un résultat R de correspondance faussement négatif (pour des empreintes liées au même individu), et, d'autre part, le nombre total de paires ayant un résultat négatif.

Ici, pour chaque fonction d'identification, plus l'aire sous la courbe des taux FRR en fonction des taux FAR est faible, plus la fonction est considérée comme performante. En effet, une fonction performante ne doit pas restituer des résultats d'identification négatifs de manière erronée. Le score P de performance peut donc par exemple dépendre de l'opposé de l'aire sous la courbe, ou encore de l'opposé d'un taux FRR de faux rejets obtenu pour une valeur précise de taux de fausses acceptations.

Dans l'exemple de la Figure 3, la fonction améliorée f* est manifestement plus performante que la fonction f ; en particulier, pour un taux FAR de fausses acceptations égal à 1,0%, on constate que les taux FRR de faux rejets obtenus sont respectivement d'environ 41% pour la fonction améliorée f*, et d'environ 43% pour la fonction f.

La Figure 4 est un tableau de données de variance des taux FAR de fausses acceptations, pour une même fonction f d'identification et pour différents seuils T de validation, en fonction de diverses bases de données d'empreintes de référence et d'empreintes candidates considérées.

La première ligne, la deuxième ligne et la troisième ligne du tableau de variance de taux FAR de la Figure 4 correspondent respectivement à une première base TPUL1, une deuxième base TPUL2 et une troisième base TPUL3 d'empreintes de référence et d'empreintes candidates. Les colonnes correspondent à différents seuils T de validation au-delà desquels le résultat R de correspondance entre deux empreintes est considéré comme positif. Les seuils de validation sont ordonnés dans l'ordre croissant, de gauche à droite du tableau. On rappelle que les empreintes de référence et les empreintes candidates utilisées pour l'évaluation sont labellisées, ce qui permet de déterminer les paires empreinte candidate/empreinte de référence correspondant à des faux rejets ou fausses acceptations. Dans le présent exemple, le taux FAR de fausses acceptations attendu est de 1,0% pour un seuil T de validation égal à 2500,00. On constate que les taux FAR obtenus avec les trois bases de données varient peu, entre 0,86% et 1,42%.

La dernière ligne du tableau donne l'écart-type σ entre les trois taux de fausses acceptations, spécifique à chaque valeur de seuil T de validation. Par exemple, pour un seuil T de validation égal à 2500,00, l'écart-type entre les taux FAR est à 0,28.

On comprendra que, plus l'écart-type est faible, plus la fonction f est considérée comme stable pour les fausses acceptations. Le score P de performance peut donc par exemple dépendre de l'opposé de l'écart-type σ.

Il est avantageux de s'assurer que la fonction f d'identification soit stable du point de vue des fausses acceptations, afin de pouvoir utiliser un même seuil T de validation quelle que soit la base UL d'empreintes latentes considérées, tout en gardant la maîtrise du taux de fausses acceptations. On pourrait également évaluer la stabilité vis-à-vis des faux rejets.

Le score de performance P ainsi obtenu, associé au score de biais S, peut permettre de sélectionner ou de développer une fonction d'identification biométrique présentant un biais moindre vis-à-vis du risque de Doddington, et présentant aussi de bonnes performances en termes de minimisation des faux rejets et/ou de stabilité des fausses acceptations.

De retour au procédé 10 d'évaluation, on compare, à une étape 600 optionnelle, le score de biais S par rapport à un seuil de biais Sₘₐₓ. Par exemple, la fonction f d'identification biométrique est évaluée comme suffisamment peu biaisée du point de vue des risques de Doddington si et seulement si S ≤ Sₘₐₓ. Le seuil de biais dépend des métriques choisies.

Il serait possible de comparer le score de performance P à un seuil, ou de créer un score composite à partir des scores de biais et de performance et de comparer ledit score composite à un autre seuil.

Si S > Sₘₐₓ, on peut déterminer qu'une nouvelle amélioration de la fonction f d'identification biométrique est nécessaire, afin d'obtenir une fonction moins biaisée du point de vue des risques de Doddington et/ou plus performante.

La fonction améliorée d'identification biométrique peut être générée par fusion d'algorithmes et/ou par isotropisation et/ou par optimisation de réseau de neurones convolutif (CNN).

### Système d'identification biométrique

On a schématisé sur la Figure 5 un système 1 d'identification biométrique selon un exemple de réalisation.

Le système 1 d'identification biométrique est configuré pour mettre en oeuvre une identification biométrique d'une empreinte acquise B_{TP}, vis-à-vis d'au moins une empreinte biométrique de référence B_{UL} (et, de préférence, vis-à-vis d'une base de données UL comprenant un grand nombre d'empreintes de référence B_{UL}).

L'empreinte biométrique de référence B_{UL} est une donnée non identifiée, c'est-à-dire qu'on ne dispose pas de données d'identité associées d'une manière fiable à un individu dont est issue l'empreinte biométrique de référence B_{UL}. De préférence, la donnée biométrique de référence non identifiée B_{UL} est issue d'une base UL d'empreintes latentes non identifiées. Cette base UL a par exemple été constituée par les forces de police.

La base UL comprend de préférence un grand nombre d'empreintes de référence, par exemple plus de 10 000 empreintes de référence, de préférence plus de 1 000 000 empreintes de référence. Les empreintes de référence (ci-après notées B_{UL}) sont de préférence des empreintes latentes, non labellisées, c'est-à-dire non associées à une identité d'individu. Comme il a été indiqué ci-avant, les empreintes latentes sont typiquement des empreintes qui présentent une faible visibilité, car elles peuvent se distinguer faiblement de l'arrière-plan. Ces empreintes latentes n'ont typiquement pas été acquises de manière contrôlée.

Le système 1 comprend notamment une unité de traitement 2. L'unité de traitement 2 est typiquement un processeur ou un ensemble de processeurs compris dans un serveur. L'unité de traitement 2 dispose d'un accès à la base de données UL, soit de manière filaire, soit via un réseau de communication sans fil, par exemple un réseau Wi-Fi, 4G, 5G, Bluetooth, etc. La communication est de préférence sécurisée. Il est possible que l'identification biométrique soit réalisée de manière partagée, entre plusieurs serveurs éventuellement distants partageant un accès à la base de données UL.

L'unité de traitement 2 peut en alternative être comprise dans un élément sécurisé, par exemple dans une puce sécurisée de « smart card ».

L'unité de traitement 2 dispose de moyens de stockage de données 20 sur lesquels sont chargées des instructions de code pour la mise en oeuvre du procédé d'identification biométrique, typiquement un disque ou une mémoire. Les moyens de stockage de données 20 stockent notamment du code informatique pour l'exécution de la fonction f* d'identification biométrique.

Le système 1 comprend également un capteur biométrique 3, configuré pour acquérir l'empreinte acquise B_{TP} et pour communiquer ladite empreinte à l'unité de traitement 2. Dans le présent exemple, le capteur biométrique 3 comprend une zone de positionnement de doigt (non illustrée) et comprend en outre un dispositif imageur 30 pour l'acquisition d'images d'un doigt posé sur la zone de positionnement de doigt. Le dispositif imageur 30 est de préférence un scanner Ten Print.

On comprendra que la donnée biométrique acquise B_{TP} et la ou les données biométriques de référence B_{UL} pourraient ne pas être des empreintes, mais plutôt des données d'un autre type telles que par exemple des images de visage, des extraits de voix d'individus, des images palmaires, des images rétiniennes, etc. Le type de capteur biométrique 3 est alors adapté en fonction du type de donnée biométrique nécessaire à l'identification biométrique. A l'opposé des empreintes latentes B_{UL}, l'empreinte acquise B_{TP} est, de préférence, acquise de manière contrôlée à l'aide du capteur biométrique 3, par exemple sur un suspect qui a préalablement été appréhendé. De ce fait, l'empreinte acquise B_{TP} bénéficie généralement de très bonnes conditions de visibilité. Il peut s'agir d'une empreinte du type « Ten Print ». De manière alternative, l'empreinte acquise B_{TP} est une empreinte latente, par exemple obtenue sur une scène de crime.

L'unité de traitement 2 et le capteur biométrique 3 peuvent être intégrés à un même dispositif, ou bien être reliés par une liaison filaire ou sans fil.

L'unité de traitement 2 est configurée pour exécuter en association avec le capteur biométrique 3 une identification biométrique, par exemple selon le procédé décrit ci-après en relation à la Figure 6.

Avantageusement, l'unité de traitement 2 permet également la mise en oeuvre du procédé 10 d'évaluation du biais ci-avant, à l'aide d'accès à la base UL* et à la base TP qui rassemblent des empreintes candidates et de référence labellisées destinées à l'évaluation de biais.

Ainsi, la fonction f* utilisée pour l'identification biométrique peut avoir été obtenue après une ou plusieurs sélections, fusions, isotropisations, etc. suite à une ou plusieurs évaluations telles que décrites ci-avant du biais lié aux « risques de Doddington ».

### Procédé d'identification biométrique

La Figure 6 représente un procédé 50 d'identification biométrique selon un exemple. Le procédé 50 est par exemple mis en oeuvre par le système 1. L'identification biométrique comprend ici la recherche d'une empreinte candidate B_{TP}, que l'on peut aussi qualifier de « requête », dans une base UL d'empreintes de référence B_{UL} qui sont des empreintes « latentes » encore non attribuées à des individus.

A une étape 1100, l'empreinte acquise B_{TP} est obtenue, par exemple à l'aide du capteur biométrique 3. En alternative, cette empreinte candidate est récupérée en mémoire ou auprès d'une base de données d'empreintes candidates.

On rappelle que, si une identité de l'individu sur lequel est obtenue l'empreinte acquise B_{TP} est connue, il est possible d'établir grâce à l'identification biométrique si ledit individu est présent ou non parmi les empreintes de référence stockées dans la base de données UL. Pour ce faire, on compare à une étape 1200 l'empreinte acquise B_{TP} à au moins une empreinte de référence B_{UL} parmi les empreintes de référence de la base UL. De préférence, l'empreinte acquise B_{TP} est comparée à chacune des empreintes de référence présentes dans la base UL. La comparaison est réalisée à l'aide de la fonction f* d'identification biométrique, prenant en entrée l'empreinte acquise B_{TP} et l'empreinte de référence B_{UL}, et retournant en sortie un résultat de correspondance R* positif ou négatif.

Si le résultat de correspondance R* est positif (supérieur ou égal au seuil de validation associé à la fonction f* d'identification), il est déterminé à une étape 1300 que l'empreinte acquise B_{TP} est un candidat potentiel pour appartenir à un même individu que l'empreinte de référence B_{UL}. On comprendra que si plusieurs empreintes latentes ont donné un résultat de correspondance positif, toutes ces empreintes latentes sont considérées comme des candidates potentiels.

De préférence, à ce stade, un examinateur humain prend le relais. Ce dernier procède à un examen poussé de l'empreinte acquise B_{TP} et de l'empreinte de référence B_{UL} pour établir de manière visuelle si ces empreintes appartiennent en effet au même individu.

En alternative, on soumet les candidats potentiels à d'autres tests, éventuellement à d'autres algorithmes d'identification, pour corroborer ou non les résultats.

Si aucune empreinte de référence B_{UL} présente dans la base UL n'est suffisamment proche de l'empreinte acquise B_{TP} selon les résultats d'identification biométrique, cette empreinte acquise B_{TP} ne fera pas l'objet d'une vérification par un examinateur humain. Il est de préférence considéré que cette empreinte acquise B_{TP} ne figure pas dans la base UL. Grâce à l'évaluation du biais associé au risque de Doddington, on s'est assuré d'éviter que la fonction d'identification biométrique ne retourne fréquemment des fausses acceptations pour une même empreinte acquise B_{TP}, ou pour une même empreinte latente B_{UL} de la base UL.

Ainsi, on évite que l'examinateur humain ne soit invité à procéder à un trop grand nombre d'examens poussés vis-à-vis d'une même empreinte, à la suite de l'identification biométrique automatisée décrite ci-avant.

## Revendications

1. Procédé d'évaluation d'une fonction d'identification biométrique, le procédé d'évaluation étant mis en oeuvre par une unité de traitement, par exemple par un processeur, à partir d'un ensemble de données biométriques candidates (TP) acquises à l'aide d'un capteur biométrique et à partir d'un ensemble de données biométriques de référence (B_{R}), les données biométriques candidates (B_{T}) et les données biométriques de référence (B_{R}) étant du même type et étant chacune associée à un individu connu,
la fonction d'identification biométrique (f), appliquée à une donnée biométrique candidate (B_{T}) et à une donnée biométrique de référence (B_{R}), retournant un résultat de correspondance (R) desdites deux données, le procédé comprenant des étapes de :
- obtention (200) de paires de fausses correspondances, chaque paire comprenant une donnée biométrique candidate (B_{T}) et une donnée biométrique de référence (B_{R}) non associées à un même individu connu, et dont le résultat de correspondance (R) est supérieur ou égal à un seuil prédéterminé,
- détermination (300a), pour chaque donnée biométrique candidate (B_{T}) comprise dans au moins une paire de fausses correspondances, d'un premier nombre associé à ladite donnée biométrique candidate (B_{T}) et égal au nombre de paires de fausses correspondances obtenues comprenant ladite donnée biométrique candidate (B_{T}),
et/ou détermination (300b), pour chaque donnée biométrique de référence (B_{R}) comprise dans au moins une paire de fausses correspondances, d'un deuxième nombre associé à ladite donnée biométrique de référence (B_{R}) et égal au nombre de paires de fausses correspondances obtenues comprenant ladite donnée biométrique de référence (B_{R}),
- calcul (400) d'un score de biais (S) associé à la fonction d'identification biométrique (f), le score de biais étant calculé en fonction d'un maximum (WCM) des premiers nombres déterminés à partir des paires de fausses correspondances et/ou en fonction d'un maximum (LCM) des deuxièmes nombres déterminés à partir des paires de fausses correspondances,
- évaluation (600) du score de biais (S) par rapport à un seuil de biais, la fonction d'identification biométrique (f) étant évaluée comme suffisamment peu biaisée si le score de biais (S) est inférieur ou égal au seuil de biais.

2. Procédé d'évaluation selon la revendication 1, dans lequel le score de biais (S) est égal à l'un parmi :
le maximum (WCM) des premiers nombres associés à une donnée biométrique candidate (B_{T}) ;
ou le maximum (LCM) des deuxièmes nombres associés à une donnée biométrique de référence (B_{R}) ;
ou une somme du maximum (WCM) des premiers nombres associés à une donnée biométrique candidate (B_{T}) affecté d'un premier coefficient et du maximum (LCM) des deuxièmes nombres associés à une donnée biométrique de référence (B_{R}) affecté d'un deuxième coefficient.

3. Procédé d'évaluation selon l'une quelconque des revendications 1 ou 2, dans lequel l'ensemble de données biométriques de référence (B_{R}) est issu d'une base de données d'empreintes latentes d'entraînement (UL*).

4. Procédé d'évaluation selon la revendication 3, dans lequel l'ensemble de données biométriques candidates (B_{T}) comprend une pluralité de données biométriques candidates associées chacune à un individu connu présent dans la base de données d'empreintes latentes d'entraînement (UL*), et comprend en outre une pluralité de données biométriques candidates associées chacune à un individu connu absent de la base de données d'empreintes latentes d'entraînement (UL*).

5. Procédé d'évaluation selon l'une quelconque des revendications 1 à 4, dans lequel les données biométriques candidates (B_{T}) et les données biométriques de référence (B_{R}) sont issues d'empreintes digitales, ou sont issues d'images d'iris, ou sont issues d'images de visage, ou sont issues d'extraits de voix d'individus.

6. Procédé d'évaluation selon l'une quelconque des revendications 1 à 5, dans lequel, en nommant requêtes correspondantes les paires comprenant une donnée biométrique candidate (B_{T}) et une donnée biométrique de référence (B_{R}) dont le résultat de correspondance (R) retourné par la fonction biométrique (f) est supérieur ou égal au seuil prédéterminé,
le seuil prédéterminé pour le résultat de correspondance (R) est choisi pour qu'un rapport entre le nombre total de paires de fausses correspondances et le nombre total de requêtes correspondantes soit égal à un taux de fausses acceptations (FAR) prédéterminé.

7. Procédé d'évaluation selon la revendication 6, dans lequel le taux de fausses acceptations (FAR) est supérieur à 0,50%, plus préférentiellement supérieur à 1,0% et inférieur à 20%, encore plus préférentiellement égal à 10%.

8. Procédé d'évaluation selon l'une quelconque des revendications 6 ou 7, le procédé comprenant une étape de détermination (500) d'un score de performance (P) associé à la fonction d'identification biométrique (f), le score de performance (P) dépendant du taux de fausses acceptations (FAR) et dépendant en outre d'un taux de faux rejets (FRR) de la fonction d'identification biométrique (f).

9. Procédé selon la revendication précédente, dans lequel le taux de faux rejets est égal au rapport entre, d'une part, le nombre total de paires empreinte candidate/empreinte de référence donnant un résultat (R) de correspondance faussement négatif, et, d'autre part, le nombre total de paires ayant un résultat négatif.

10. Procédé d'évaluation selon l'une quelconque des revendications 1 à 9, le procédé comprenant une étape supplémentaire de comparaison entre le score de biais (S) obtenu pour la fonction d'identification biométrique (f) et un score supplémentaire de biais obtenu pour une fonction supplémentaire d'identification biométrique.

11. Procédé d'évaluation selon l'une quelconque des revendications 1 à 10, le procédé comprenant une étape supplémentaire d'obtention d'une fonction améliorée (f*) d'identification biométrique, à partir de la fonction d'identification biométrique (f),
de sorte qu'un score amélioré de biais obtenu pour la fonction améliorée (f*) d'identification biométrique soit strictement inférieur au score de biais (S) obtenu pour la fonction d'identification biométrique (f).

12. Procédé de traitement de données comprenant un procédé d'évaluation selon la revendication 11, une fonction améliorée (f*) d'identification biométrique étant obtenue à l'issue dudit procédé d'évaluation, le procédé de traitement de données comprenant en outre une identification d'au moins une donnée biométrique non identifiée (B_{UL}) à partir de la fonction améliorée (f*) d'identification biométrique et à partir de la donnée biométrique non identifiée (B_{UL}), le procédé de traitement comprenant des étapes de :
- obtention (1100) d'une donnée biométrique candidate (B_{TP}), la donnée biométrique candidate (B_{TP}) étant du même type que la donnée biométrique non identifiée (B_{UL}),
- calcul (1200) d'au moins un résultat de correspondance (R*) entre la donnée biométrique candidate (B_{TP}) obtenue et la donnée biométrique non identifiée (B_{UL}),
- si le résultat de correspondance (R*) est supérieur ou égal à un seuil, association (1300) entre la donnée biométrique non identifiée (B_{UL}) et une identité correspondant à la donnée biométrique candidate.

13. Système (1) d'identification biométrique d'un individu, comprenant :
- une unité de traitement (2) configurée pour mettre en oeuvre un procédé de traitement selon la revendication 12, à partir de la donnée biométrique candidate acquise et à partir d'un ensemble de données biométriques non identifiées,
- un capteur biométrique (3) configuré pour acquérir une donnée biométrique candidate.

14. Produit programme d'ordinateur sur lequel sont enregistrées des instructions de code qui, lorsque lesdites instructions sont exécutées par un ordinateur, conduisent l'ordinateur à exécuter un procédé d'évaluation selon l'une quelconque des revendications 1 à 11, ou à exécuter un procédé de traitement selon la revendication 12.

15. Moyens de stockage lisibles par ordinateur, sur lesquels sont enregistrées des instructions de code pour la mise en oeuvre d'un procédé d'évaluation selon l'une quelconque des revendications 1 à 11, ou pour la mise en oeuvre d'un procédé de traitement selon la revendication 12.

## Patentansprüche

1. Verfahren zur Bewertung einer biometrischen Identifikationsfunktion, wobei das Bewertungsverfahren von einer Verarbeitungseinheit, zum Beispiel einem Prozessor, ausgehend von einer Gruppe von mit Hilfe eines biometrischen Sensors erfassten biometrischen Kandidat-Daten (TP) und ausgehend von einer Gruppe von biometrischen Bezugsdaten (B_{R}) durchgeführt wird;
wobei die biometrischen Kandidat-Daten (B_{T}) und die biometrischen Bezugsdaten (B_{R}) von der gleichen Art und je einer bekannten Person zugeordnet sind,
wobei die an einen biometrischen Kandidat-Datenwert (B_{T}) und an einen biometrischen Bezugsdatenwert (B_{R}) angewendete biometrische Identifikationsfunktion (f) ein Übereinstimmungsergebnis (R) der zwei Daten zurückschickt, wobei das Verfahren folgende Schritte aufweist:
- Erhalt (200) von Paaren falscher Übereinstimmungen, wobei jedes Paar einen biometrischen Kandidat-Datenwert (B_{T}) und einen biometrischen Bezugsdatenwert (B_{R}) enthält, die nicht einer gleichen bekannten Person zugeordnet sind, und deren Übereinstimmungsergebnis (R) größer als eine oder gleich einer vorbestimmten Schwelle ist,
- Bestimmung (300a), für jeden in mindestens einem Paar falscher Übereinstimmungen enthaltenen biometrischen Kandidat-Datenwert (B_{T}), einer ersten Zahl, die dem biometrischen Kandidat-Datenwert (B_{T}) zugeordnet und gleich der Zahl von erhaltenen Paaren falscher Übereinstimmungen ist, die den biometrischen Kandidat-Datenwert (B_{T}) enthalten,
und/oder Bestimmung (300b), für jeden in mindestens einem Paar falscher Übereinstimmungen enthaltenen biometrischen Bezugsdatenwert (B_{R}), einer zweiten Zahl, die dem biometrischen Bezugsdatenwert (B_{R}) zugeordnet und gleich der Zahl von erhaltenen Paaren falscher Übereinstimmungen ist, die den biometrischen Bezugsdatenwert (B_{R}) enthalten,
- Berechnung (400) eines der biometrischen Identifikationsfunktion (f) zugeordneten Bias-Scores, wobei der Bias-Score abhängig von einem Maximum (WCM) der ausgehend von den Paaren falscher Übereinstimmungen bestimmten ersten Zahlen, und/oder ausgehend von einem Maximum (LCM) der ausgehend von den Paaren falscher Übereinstimmungen bestimmten zweiten Zahlen berechnet wird,
- Bewertung (600) des Bias-Scores (S) bezüglich einer Bias-Schwelle, wobei die biometrische Identifikationsfunktion (f) als ausreichend wenig verzerrt bewertet wird, wenn der Bias-Score (S) niedriger als die oder gleich der Bias-Schwelle ist.

2. Bewertungsverfahren nach Anspruch 1, wobei der Bias-Score (S) gleich einem ist von:
dem Maximum (WCM) der einem biometrischen Kandidat-Datenwert (B_{T}) zugeordneten ersten Zahlen;
oder dem Maximum (LCM) der einem biometrischen Bezugsdatenwert (B_{R}) zugeordneten zweiten Zahlen;
oder einer Summe des mit einem ersten Koeffizienten versehenen Maximums (WCM) der einem biometrischen Kandidat-Datenwert (B_{T}) zugeordneten ersten Zahlen, und des mit einem zweiten Koeffizienten versehenen Maximums (LCM) der einem biometrischen Bezugsdatenwert (B_{R}) zugeordneten zweiten Zahlen.

3. Bewertungsverfahren nach einem der Ansprüche 1 oder 2, wobei die Gruppe von biometrischen Bezugsdaten (B_{R}) von einer Datenbank latenter Trainingsabdrücke (UL*) stammt.

4. Bewertungsverfahren nach Anspruch 3, wobei die Gruppe von biometrischen Kandidat-Daten (B_{T}) eine Vielzahl biometrischer Kandidat-Daten enthält, die je einer bekannten Person zugeordnet sind, die in der Datenbank latenter Trainingsabdrücke (UL*) vorhanden ist, und außerdem eine Vielzahl biometrischer Kandidat-Daten enthält, die je einer bekannten Person zugeordnet sind, die in der Datenbank latenter Trainingsabdrücke (UL*) nicht vorhanden ist.

5. Bewertungsverfahren nach einem der Ansprüche 1 bis 4, wobei die biometrischen Kandidat-Daten (B_{T}) und die biometrischen Bezugsdaten (B_{R}) von Fingerabdrücken stammen, oder von Irisbildern stammen, oder von Gesichtsbildern stammen, oder von Stimmausschnitten von Personen stammen.

6. Bewertungsverfahren nach einem der Ansprüche 1 bis 5, wobei, indem die einen biometrischen Kandidat-Datenwert (B_{T}) und einen biometrischen Bezugsdatenwert (B_{R}) enthaltenden Paare, deren von der biometrischen Funktion (f) zurückgeschicktes Übereinstimmungsergebnis (R) höher als oder gleich der vorbestimmten Schwelle ist, übereinstimmende Anforderungen genannt werden,
die vorbestimmte Schwelle für das Übereinstimmungsergebnis (R) so gewählt wird, dass ein Verhältnis zwischen der Gesamtzahl von Paaren falscher Übereinstimmungen und der Gesamtzahl von übereinstimmenden Anforderungen gleich einer vorbestimmten Falschakzeptanzrate (FAR) ist.

7. Bewertungsverfahren nach Anspruch 6, wobei die Falschakzeptanzrate (FAR) höher ist als 0,50%, bevorzugter höher als 1,0% und niedriger ist als 20%, noch bevorzugter gleich 10%.

8. Bewertungsverfahren nach einem der Ansprüche 6 oder 7, wobei das Verfahren einen Schritt der Bestimmung (500) eines der biometrischen Identifikationsfunktion (f) zugeordneten Leistungsscores (P) enthält, wobei der Leistungsscore (P) von der Falschakzeptanzrate (FAR) abhängt und außerdem von einer Falschrückweisungsrate (FRR) der biometrischen Identifikationsfunktion (f) abhängt.

9. Verfahren nach dem vorhergehenden Anspruch, wobei die Falschrückweisungsrate gleich dem Verhältnis zwischen einerseits der Gesamtzahl von Kandidatabdruck/Bezugsabdruck-Paaren, die ein falsch negatives Übereinstimmungsergebnis (R) ergibt, und andererseits der Gesamtzahl von Paaren mit einem negativen Ergebnis ist.

10. Bewertungsverfahren nach einem der Ansprüche 1 bis 9, wobei das Verfahren einen zusätzlichen Schritt des Vergleichs zwischen dem für die biometrische Identifikationsfunktion (f) erhaltenen Bias-Score (S) und einem für eine zusätzliche biometrische Identifikationsfunktion erhaltenen zusätzlichen Bias-Score enthält.

11. Bewertungsverfahren nach einem der Ansprüche 1 bis 10, wobei das Verfahren einen zusätzlichen Schritt des Erhalts einer verbesserten biometrischen Identifikationsfunktion (f*) ausgehend von der biometrischen Identifikationsfunktion (f) enthält,
so dass ein für die verbesserte biometrische Identifikationsfunktion (f*) erhaltener verbesserter Bias-Score strikt niedriger ist als der für die biometrische Identifikationsfunktion (f) erhaltene Bias-Score (S).

12. Datenverarbeitungsverfahren, das ein Bewertungsverfahren nach Anspruch 11 enthält, wobei eine verbesserte biometrische Identifikationsfunktion (f*) am Ende des Bewertungsverfahrens erhalten wird, wobei das Datenverarbeitungsverfahren außerdem eine Identifikation mindestens eines nicht identifizierten biometrischen Datenwerts (B_{UL}) ausgehend von der verbesserten biometrischen Identifikationsfunktion (f*) und ausgehend von dem nicht identifizierten biometrischen Datenwert (B_{UL}) enthält, wobei das Verarbeitungsverfahren folgende Schritte enthält:
- Erhalt (1100) eines biometrischen Kandidat-Datenwerts (B_{TP}), wobei der biometrische Kandidat-Datenwert (B_{TP}) von der gleichen Art ist wie der nicht identifizierte biometrische Datenwert (B_{UL}),
- Berechnung (1200) mindestens eines Übereinstimmungsergebnisses (R*) zwischen dem erhaltenen biometrischen Kandidat-Datenwert (B_{TP}) und dem nicht identifizierten biometrischen Datenwert (B_{UL}),
- wenn das Übereinstimmungsergebnis (R*) höher als eine oder gleich einer Schwelle ist, Zuordnung (1300) zwischen dem nicht identifizierten biometrischen Datenwert (B_{UL}) und einer dem biometrischen Kandidat-Datenwert entsprechenden Identität.

13. System (1) zur biometrischen Identifikation einer Person, das enthält:
- eine Verarbeitungseinheit (2), die konfiguriert ist, ein Verarbeitungsverfahren nach Anspruch 12 ausgehend von dem erfassten biometrischen Kandidat-Datenwert und ausgehend von einer Gruppe von nicht identifizierten biometrischen Daten durchzuführen,
- einen biometrischen Sensor (3), der konfiguriert ist, einen biometrischen Kandidat-Datenwert zu erfassen.

14. Computerprogrammprodukt, auf dem Codeanweisungen gespeichert sind, die, wenn die Anweisungen von einem Computer ausgeführt werden, den Computer veranlassen, ein Bewertungsverfahren nach einem der Ansprüche 1 bis 11 oder ein Verarbeitungsverfahren nach Anspruch 12 auszuführen.

15. Computerlesbare Speichereinrichtungen, auf denen Codeanweisungen für die Durchführung eines Bewertungsverfahrens nach einem der Ansprüche 1 bis 11 oder für die Durchführung eines Verarbeitungsverfahrens nach Anspruch 12 gespeichert sind.

## Claims

1. Method for evaluating a biometric identification function, the evaluation method being implemented by a processing unit, for example a processor, on the basis of a set of candidate biometric data (TP) acquired using a biometric sensor and on the basis of a set of reference biometric data (B_{R}),
the candidate biometric data (B_{T}) and the reference biometric data (B_{R}) being of the same type and each associated with a known individual,
the biometric identification function (f), applied to a candidate biometric datum (B_{T}) and to a reference biometric datum (B_{R}), returning a result (R) for the match between said two data, the method comprising steps of:
- obtaining (200) pairs of false matches, each pair comprising a candidate biometric datum (B_{T}) and a reference biometric datum (B_{R}) which are not associated with the same known individual, and the match result (R) of which is above or equal to a predetermined threshold,
- determining (300a), for each candidate biometric datum (B_{T}) contained in at least one pair of false matches, a first number which is associated with said candidate biometric datum (B_{T}) and equal to the number of pairs of false matches which are obtained comprising said candidate biometric datum (B_{T}),
and/or determining (300b), for each reference biometric datum (B_{R}) contained in at least one pair of false matches, a second number which is associated with said reference biometric datum (B_{R}) and equal to the number of pairs of false matches which are obtained comprising said reference biometric datum (B_{R}),
- calculating (400) a bias score (S) associated with the biometric identification function (f), the bias score being calculated as a function of a maximum (WCM) of the first numbers which are determined on the basis of the pairs of false matches and/or as a function of a maximum (LCM) of the second numbers which are determined on the basis of the pairs of false matches,
- evaluating (600) the bias score (S) with respect to a bias threshold, the biometric identification function (f) being evaluated as sufficiently unbiased if the bias score (S) is below or equal to the bias threshold.

2. Evaluation method according to Claim 1, in which the bias score (S) is equal to one out of:
the maximum (WCM) of the first numbers which are associated with a candidate biometric datum (B_{T});
or the maximum (LCM) of the second numbers which are associated with a reference biometric datum (B_{R});
or a sum of the maximum (WCM) of the first numbers which are associated with a candidate biometric datum (B_{T}) which is assigned a first coefficient and of the maximum (LCM) of the second numbers which are associated with a reference biometric datum (B_{R}) which is assigned a second coefficient.

3. Evaluation method according to either one of Claims 1 and 2, in which the set of reference biometric data (B_{R}) originates from a database of training latent prints (UL*).

4. Evaluation method according to Claim 3, in which the set of candidate biometric data (B_{T}) comprises a plurality of candidate biometric data which are each associated with a known individual who is present in the database of training latent prints (UL*), and further comprises a plurality of candidate biometric data which are each associated with a known individual who is absent from the database of training latent prints (UL*).

5. Evaluation method according to any one of Claims 1 to 4, in which the candidate biometric data (B_{T}) and the reference biometric data (B_{R}) originate from fingerprints, or originate from iris images, or originate from face images, or originate from voice extracts from individuals.

6. Evaluation method according to any one of Claims 1 to 5, in which, calling "matching requests" those pairs comprising a candidate biometric datum (B_{T}) and a reference biometric datum (B_{R}) the result (R) for the match between which, returned by the biometric function (f), is above or equal to the predetermined threshold, the predetermined threshold for the match result (R) is chosen so that a ratio between the total number of pairs of false matches and the total number of matching requests is equal to a predetermined false acceptance rate (FAR).

7. Evaluation method according to Claim 6, in which the false acceptance rate (FAR) is greater than 0.50%, more preferably greater than 1.0% and less than 20%, more preferably still equal to 10%.

8. Evaluation method according to either one of Claims 6 and 7, the method comprising a step of determining (500) a performance score (P) associated with the biometric identification function (f), the performance score (P) depending on the false acceptance rate (FAR) and further depending on a false reject rate (FRR) of the biometric identification function (f).

9. Method according to the preceding claim, in which the false reject rate is equal to the ratio between, on the one hand, the total number of candidate print/reference print pairs giving a falsely negative match result (R) and, on the other hand, the total number of pairs having a negative result.

10. Evaluation method according to any one of Claims 1 to 9, the method comprising an additional step of comparing the bias score (S) obtained for the biometric identification function (f) with an additional bias score obtained for an additional biometric identification function.

11. Evaluation method according to any one of Claims 1 to 10, the method comprising an additional step of obtaining an improved biometric identification function (f*), on the basis of the biometric identification function (f),
so that an improved bias score obtained for the improved biometric identification function (f*) is strictly less than the bias score (S) obtained for the biometric identification function (f).

12. Data processing method comprising an evaluation method according to Claim 11, an improved biometric identification function (f*) being obtained at the end of said evaluation method, the data processing method further comprising identifying at least one unidentified biometric datum (B_{UL}) on the basis of the improved biometric identification function (f*) and on the basis of the unidentified biometric datum (B_{UL}), the processing method comprising steps of:
- obtaining (1100) a candidate biometric datum (B_{TP}), the candidate biometric datum (B_{TP}) being of the same type as the unidentified biometric datum (B_{UL}),
- calculating (1200) at least one result (R*) for the match between the candidate biometric datum (B_{TP}) obtained and the unidentified biometric datum (B_{UL}),
- if the match result (R*) is above or equal to a threshold, associating (1300) the unidentified biometric datum (B_{UL}) with an identity corresponding to the candidate biometric datum.

13. System (1) for biometrically identifying an individual, comprising:
- a processing unit (2) configured to implement a processing method according to Claim 12, on the basis of the candidate biometric datum acquired and on the basis of a set of unidentified biometric data,
- a biometric sensor (3) configured to acquire a candidate biometric datum.

14. Computer program product on which code instructions are recorded which, when said instructions are executed by a computer, lead the computer to execute an evaluation method according to any one of Claims 1 to 11, or to execute a processing method according to Claim 12.

15. Computer-readable storage means, on which code instructions are recorded for implementing an evaluation method according to any one of Claims 1 to 11, or for implementing a processing method according to Claim 12.
